(19) Europäisches Patentamt
European Patent Office
Office européen des brevets

(11) **EP 1 926 972 B1**

(12) **EUROPÄISCHE PATENTSCHRIFT**

(45) Veröffentlichungstag und Bekanntmachung des Hinweises auf die Patenterteilung:
**30.06.2010   Patentblatt 2010/26**

(51) Int Cl.:
***G01F 1/58*** *(2006.01)*          ***G01F 1/60*** *(2006.01)*
***G01F 25/00*** *(2006.01)*

(21) Anmeldenummer: **05788732.5**

(22) Anmeldetag: **21.09.2005**

(86) Internationale Anmeldenummer:
**PCT/EP2005/010224**

(87) Internationale Veröffentlichungsnummer:
**WO 2007/033697 (29.03.2007 Gazette 2007/13)**

(54) **VERFAHREN ZUM BETREIBEN EINES ELEKTROMAGNETISCHEN DURCHFLUSSMESSERS SOWIE ELEKTROMAGNETISCHER DURCHFLUSSMESSER**

METHOD FOR OPERATING AN ELECTROMAGNETIC FLOWMETER AND ELECTOMAGNETIC FLOWMETER

PROCEDE POUR FAIRE FONCTIONNER UN DISPOSITIF ELECTROMAGNETIQUE DE MESURE DE DEBIT, ET DISPOSITIF ELECTROMAGNETIQUE DE MESURE DE DEBIT CORRESPONDANT

(84) Benannte Vertragsstaaten:
**DE FR GB IT**

(43) Veröffentlichungstag der Anmeldung:
**04.06.2008   Patentblatt 2008/23**

(73) Patentinhaber: **SIEMENS AKTIENGESELLSCHAFT**
**80333 München (DE)**

(72) Erfinder: **RASMUSSEN, Claus, Nygaard**
**DK-6400 Sønderborg (DK)**

(56) Entgegenhaltungen:
EP-A- 0 969 268          EP-A2- 1 460 394
DE-A1- 19 917 268        DE-A1-102004 046 238

## Beschreibung

Die Erfindung betrifft ein Verfahren zum Betreiben eines elektromagnetischen Durchflussmessers nach dem Oberbegriff des Anspruchs 1 sowie einen elektromagnetischen Durchflussmesser zur Durchführung des Verfahrens nach dem Oberbegriff des Anspruchs 8.

Aus der DE 199 17 268 A1 sind bereits ein Verfahren zum Überprüfen eines elektromagnetischen Durchflussmessers und ein Durchflussmesser bekannt. Der Durchflussmesser weist ein Messrohr und eine Spulenanordnung auf, die ein Magnetfeld senkrecht zur Durchflussrichtung durch das Messrohr erzeugt, wobei die Richtung des durch die Spulenanordnung fließenden Stroms periodisch geändert wird. Um auf einfache Art und Weise eine Überprüfung des Durchflussmessers zu ermöglichen, wird nach dem Ändern der Stromrichtung mindestens ein Parameter des Anstiegs des Stroms, beispielsweise die Anstiegszeit, ermittelt und mit einem Referenzwert verglichen. Solange der Durchflussmesser ungestört und fehlerfrei arbeiten kann, sind die Anstiegsverläufe mit einer sehr geringen Streubreite praktisch identisch. Erst bei Auftreten eines Fehlers elektrischer oder magnetischer Art verändert sich der Anstiegsverlauf. Diese Veränderung ist ein Zeichen dafür, dass der Durchflussmesser möglicherweise ungenaue Messergebnisse liefert und näher überprüft oder ausgetauscht werden muss. Diese Überprüfung kann während des Messens eines Durchflusses stattfinden. Das hat den Vorteil, dass die Durchflussmessung nicht zur Überprüfung des Durchflussmessers unterbrochen werden muss und dass der Durchflussmesser in der Lage ist, laufend oder permanent eine Überprüfung seiner Funktion vorzunehmen. Der Durchflussmesser kann genau in dem Zustand überprüft werden, in welchem er auch im Normalbetrieb arbeitet. Weiterhin ist aus der genannten Druckschrift bekannt, nach dem Umschalten der Stromrichtung eine erhöhte Spannung, die auch als Boostspannung bezeichnet wird, zu verwenden. Diese beschleunigt den Aufbau des Magnetfeldes und ermöglicht somit, die eigentliche Messung in kürzeren Messperioden vorzunehmen. Wenn die gewünschte Stromstärke in der Spulenanordnung erreicht ist, wird die Spannung zurückgenommen und auf eine Regelung eines Konstantstroms in der Spulenanordnung umgeschaltet. Mit einem Konstantstrom in der Spulenanordnung wäre bei einem idealen elektromagnetischen Durchflussmesser an den Messelektroden eine Spannung abgreifbar, die direkt proportional zur Geschwindigkeit des durch das Messrohr fließenden Mediums ist. In der Praxis sind jedoch Durchflussmesser mit einem Messfehler behaftet, der in zwei Bestandteile aufgeteilt werden kann: Den Linearitätsfehler und den Offsetfehler. Der Offsetfehler kann auch als Nullpunktfehler bezeichnet werden.

Aus der EP 0 969 268 A1 ist ein Verfahren zum Regeln des Spulenstroms von magnetisch-induktiven Durchflussmessern bekannt, bei welchem zur Kompensation des Einflusses von in die Spulenkerne des Magnetsystems des Durchflussmessers induzierten Wirbelströmen eine Korrekturgröße für die in der nächsten Halbperiode anliegende Spannung gebildet wird.

In der EP 1 460 394 A2 ist ein weiteres Verfahren zum Regeln des Spulenstroms von magnetisch-induktiven Durchflussmessern beschrieben, bei welchem der Einfluss der während des Umschaltvorgangs in die Spulenanordnung induzierten Wirbelströme näherungsweise kompensiert wird.

In der DE 10 2004 046 238 A1 ist ein magnetisch-induktives Durchflussmessgerät offenbart, bei welchem zur Überprüfung des Geräts ein stufenförmiger Spannungsverlauf an die Spulenanordnung des Durchflussmessers angelegt und anhand des sich einstellenden Spulenstromverlaufs Zeitkonstanten ermittelt und ausgewertet werden.

Der Erfindung liegt die Aufgabe zugrunde, ein Verfahren zum Betreiben eines elektromagnetischen Durchflussmessers sowie einen Durchflussmesser zur Durchführung des Verfahrens zu schaffen, die sich durch eine verbesserte Messgenauigkeit auszeichnen.

Zur Lösung dieser Aufgabe weist das neue Verfahren der eingangs genannten Art die im kennzeichnenden Teil des Anspruchs 1 angegebenen Merkmale auf. In den abhängigen Ansprüchen sind vorteilhafte Weiterbildungen, in Anspruch 8 ein elektromagnetischer Durchflussmesser zur Durchführung des Verfahrens beschrieben.

Die Erfindung hat den Vorteil, dass ein Erkennen eines Offsetfehlers, der zu einem großen Teil durch ein instabiles magnetisches Feld verursacht wird, ermöglicht wird. Wenn eine Messwertermittlung bereits durchgeführt wird, bevor das Magnetfeld stabilisiert ist, hat das nämlich zur Folge, dass an den Messelektroden ein mit einem Offset behaftetes Messsignal abgegriffen wird. Da eine beträchtliche Verzögerung zwischen dem Spulenstrom und dem erzeugten Magnetfeld vorhanden ist, ist allein die Kenntnis der Stromstärke als Maß für die Stärke des Magnetfeldes nicht ausreichend. Zusätzlich wird daher bei konstant gehaltenem Spulenstrom die an der Spulenanordnung anliegende Spannung und/oder ihre Ableitung ermittelt. Liegt diese außerhalb eines zulässigen Toleranzbereichs, so ist das Magnetfeld noch nicht ausreichend stabilisiert. Die zu dieser Überprüfung erforderlichen Mittel können im Durchflussmesser selbst oder alternativ dazu als gesondertes Gerät, das zur Überprüfung des Durchflussmessers an diesen angeschlossen wird, realisiert werden.

Die Erfindung beruht auf der Erkenntnis, dass Offsetfehler überwiegend durch ein instabiles Magnetfeld verursacht werden und dass ein instabiles Magnetfeld zu veränderlichen Spannungswerten an den Zuleitungen der Spulenanordnung führt. Ein instabiles Magnetfeld kann daher durch Ermitteln der an der Spulenanordnung anliegenden Spannung und/oder ihre Ableitung und Vergleich der jeweils ermittelten Werte mit einem zugeordneten Referenzwert festgestellt werden. Offsetfehler können zwar prinzipiell verschiedene Ursachen haben, beispielsweise resistive, kapazitive und induktive Kopplung zwischen dem Messkreis und dem Spulenerregerkreis. Es hat sich jedoch herausgestellt, dass Schwankungen des Magnetfelds einen vergleichsweise hohen Offsetfehler verursachen. Ein Problem bei Durchflussmessern mit sich periodisch verändernder Stromrichtung in der Spulenanordnung kann darin bestehen, dass das Magnetfeld im Messrohr zu dem Zeitpunkt, in welchem bereits die Spannung an Messelektroden zur Messwertermittlung ausgewertet wird, noch nicht stabilisiert ist. Dies führt zu einer induzierten Spannung im Messkreis, die proportional zur Änderung des Magnetfelds und abhängig von der Geometrie des Messkreises ist. Es gilt:

$$U_{induced} \propto \frac{\partial \phi}{\partial t},$$

mit

Uinduced - an den Messelektroden abgreifbare induzierte Spannung
$\phi$ - magnetischer Fluss.

Die induzierte Spannung wird dem Teil der an den Messelektroden abgreifbaren Spannung, der durch die Geschwindigkeit des durch das Messrohr fließenden Mediums entsteht, überlagert. Sie ist unabhängig von der Fließgeschwindigkeit und erscheint daher als ein Offsetfehler, dessen Größe von der Änderungsgeschwindigkeit des Magnetfelds während den Messphasen abhängt. Die Anstiegszeit des magnetischen Feldes wird durch verschiedene Primärfaktoren vergrößert. Dazu gehören Induktivität der Spulenanordnung, Hystereseverluste, Wirbelströme und magnetische Verzögerung. Ohne auf genauere Details zu diesen Faktoren einzugehen kann gesagt werden, dass die Induktivität und Hystereseverluste die Anstiegszeit des Spulenstroms vergrößern, während Wirbelströme und magnetische Verzögerung dazu führen, dass das Magnetfeld im Messrohr gegenüber dem Spulenstrom verzögert wird. Damit der Spulenstrom die gewünschte Größe in vergleichsweise kurzer Zeit erreicht, wird, wie bereits eingangs erläutert, nach der Stromrichtungsumkehr eine Boostspannung an die Spulenanordnung angelegt. Nach Erreichen des gewünschten Stroms wird zur Erregung der Spulenanordnung eine Konstantstromquelle verwandt. Die beim Magnetfeldaufbau entstehenden Wirbelströme führen dazu, dass es eine gewisse Zeit in Anspruch nimmt, bis das Magnetfeld nach Erreichen des Konstantstroms stabilisiert ist. Solange das Magnetfeld noch nicht stabilisiert ist, kann auch die zur Regelung des Konstantstroms an den Klemmen der Spulenanordnung anliegende Spannung nicht stabil werden. Fehlerbehaftete Messungen können somit in einfacher Weise erkannt und bei der Messwertberechnung, die beispielsweise eine Mittelwertbildung über mehrere Spannungswerte der Messelektroden umfasst, ausgeschlossen werden oder es kann eine Warnung an einen Benutzer ausgegeben werden, wenn eine zu kurze Messphase verbleibt. Dadurch wird die Zuverlässigkeit der Messwerte erhöht und die Messgenauigkeit verbessert.

Eine weitere Möglichkeit zur Verbesserung der Genauigkeit besteht somit darin, die Messung erst mit vergleichbar stabilem Spannungssignal und damit stabilem Magnetfeld beginnen zu lassen. Dazu kann die Auswerteeinrichtung derart ausgebildet werden, dass die an den Messelektroden abgegriffene Spannung erst dann zur Messwertermittlung herangezogen wird, wenn die an der Spulenanordnung anliegende Spannung und/oder ihre Ableitung den jeweils zugeordneten Referenzwert bei konstant gehaltenem Spulenstrom unterschreitet.

Dabei kann der Zeitpunkt, wann die Spannung und/oder ihre Ableitung den jeweils zugeordneten Referenzwert unterschreitet, mit einem weiteren Referenzwert verglichen werden. Wenn dieser Zeitpunkt außerhalb eines vorbestimmten Toleranzbereichs liegt, beispielsweise wenn nur noch weniger als 20% der Messperiode als Zeitraum mit gültigen Spannungswerten an den Messelektroden verbleiben, wird eine Fehlermeldung ausgegeben. Das hat den Vorteil, dass eine Möglichkeit zur Erkennung eines Fehlers in der Spulenanordnung geschaffen wird. Die Zeit, die bis zur Stabilisierung des Magnetfeldes vergeht, ist exemplarspezifisch und Abweichungen von einem beispielsweise bei der Inbetriebnahme ermittelten Referenzwert deuten auf eine Veränderung des elektrischen oder magnetischen Verhaltens der Spulenanordnung aufgrund eines Fehlers hin. Dabei kann diese Überprüfung durch den Durchflussmesser selbst oder ein externes Gerät, das an den Durchflussmesser angeschlossen wird, erfolgen.

In vorteilhafter Weise kann eine weitere Verbesserung der Messgenauigkeit erreicht werden, wenn die Auswertung einer an Messelektroden abgegriffenen Spannung unterbrochen wird, wenn die an der Spulenanordnung anliegende Spannung und/oder ihre Ableitung den jeweils zugeordneten Referenzwert überschreitet. Auf diese Weise werden die Spannungswerte an den Messelektroden, die mit größerem Offsetfehler behaftet sind, nicht in die Messwertermittlung einbezogen.

Der Referenzwert für die an der Spulenanordnung anliegende Spannung kann in besonders einfacher Weise typspezifisch in Abhängigkeit des Produkts aus dem Widerstand der Spulenanordnung und dem konstant gehaltenem Spulenstrom vorbestimmt werden. Vorzugsweise wird der Referenzwert auf 5% über diesem Produkt gesetzt. In praktischen Versuchen wurden mit diesem Wert gute Ergebnisse erzielt. Der Referenzwert für die Ableitung der Spannung kann beispielsweise anhand von Signalverläufen, die im Gutzustand bei der Inbetriebnahme des Durchflussmessers aufgenommen wurden, festgelegt werden. Ein geeigneter Wert ist z. B. der zweifache Mittelwert der Ableitung, die im Gutzustand vor dem Ende von Messperioden ermittelt wurde.

In vorteilhafter Weise wird eine exemplarspezifische Kompensation des durch ein instabiles Magnetfeld verursachten Offsetfehlers ermöglicht, wenn anhand der ermittelten, an der Spulenanordnung anliegenden Spannung gemäß einer vorbestimmten Beziehung ein Korrekturwert berechnet wird, um welchen die an den Messelektroden abgegriffene Spannung zur Messwertermittlung korrigiert wird. Diese vorbestimmte funktionale Beziehung wird vorzugsweise am Durchflussmesser selbst zu einem früheren Zeitpunkt ermittelt, vorzugsweise bei der Inbetriebnahme. Sie wird als parametrierte, lineare Gleichung abgelegt, die somit für künftige Kompensationsvorgänge zur Verfügung steht. Jeder Durchflussmesser erhält so eine individuelle vorbestimmte funktionale Beziehung, mit welcher die Kompensation des Offsetfehlers sehr genau erfolgen kann.

Damit die Grenzwertüberwachung nicht durch Rauschen, das Messsignalen in der Praxis üblicherweise überlagert ist, vorzeitig anspricht, kann in vorteilhafter Weise die ermittelte Spannung und/oder ihre Ableitung zunächst mit einem Tiefpass gefiltert werden, bevor der Vergleich mit dem jeweils zugeordneten Referenzwert durchgeführt wird.

Anhand der Zeichnungen, in denen ein Ausführungsbeispiel der Erfindung dargestellt ist, werden im Folgenden die Erfindung sowie Ausgestaltungen und Vorteile näher erläutert.

Es zeigen:

Figur 1    ein Blockschaltbild eines Durchflussmessers,

Figur 2    ein Zeitdiagramm mit Spannung und Strom der Spulenanordnung sowie der magnetischen Flussdichte des Magnetfelds und

Figur 3    ein Zeitdiagramm mit dem Verlauf der Spannung an der Spulenanordnung und ihrer Ableitung.

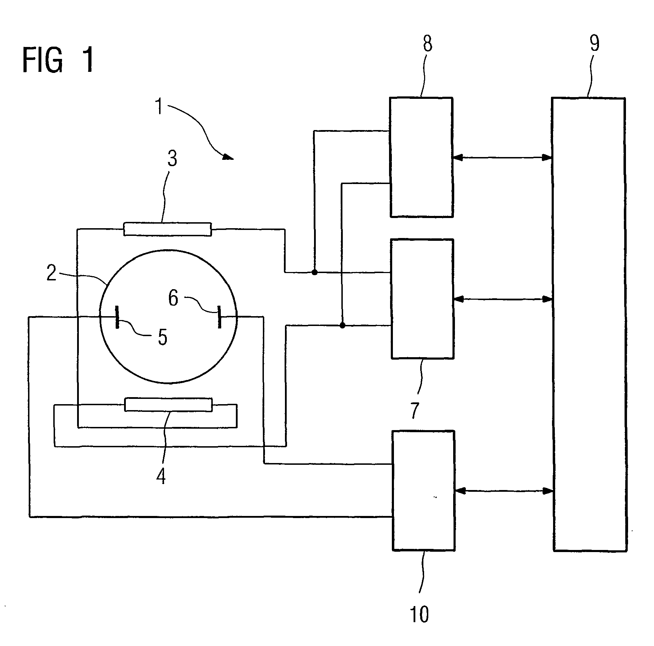

Gemäß Figur 1 weist ein elektromagnetischer Durchflussmesser 1 ein Messrohr 2 auf, das senkrecht zur Zeichnungsebene durchströmt wird. Das Messrohr 2 ist elektrisch isoliert. An dem Messrohr 2 ist eine Spulenanordnung mit zwei Spulen 3 und 4 angeordnet, die ein Magnetfeld senkrecht zur Durchströmungsrichtung erzeugen, wenn die Spulen 3 und 4 von einem Strom durchflossen werden. Im Messrohr 2 sind Messelektroden 5 und 6 vorgesehen. Diese sind so angeordnet, dass sie eine Potentialdifferenz oder Spannung senkrecht zur Durchströmungsrichtung und senkrecht zum Magnetfeld erfassen. Die Spannung zwischen den Elektroden 5 und 6 ist somit proportional zur Fließgeschwindigkeit des das Messrohr 2 durchströmenden Mediums und zur Stärke des erzeugten Magnetfelds. Die Spulen 3 und 4 sind in Reihe geschaltet und werden durch eine Ansteuereinrichtung 7 mit der zur Erzeugung eines Magnetfelds erforderlichen Spannung versorgt. In der Ansteuereinrichtung 7 ist eine H-Brückenschaltung in bekannter Weise zur Richtungsumkehr des Spulenstroms vorhanden, die der Übersichtlichkeit wegen in der Figur nicht dargestellt ist. Weiterhin besitzt die Ansteuereinrichtung 7 in bekannter Weise eine Zusatzspannungsversorgungseinrichtung, die nach dem Wechsel der Stromrichtung zunächst eine so genannte Boostspannung zum schnellen Aufbau des Magnetfelds erzeugt. Sobald der Strom in der Spulenanordnung einen vorgegebenen Stromwert erreicht hat, wird er in der Ansteuereinrichtung 7 geregelt, um während des Messvorgangs einen konstanten Strom durch die Spulenanordnung sicherzustellen. Dabei wird durch eine Messeinrichtung 8 die an der Spulenanordnung anliegende Spannung abgegriffen. Die ermittelten Spannungswerte werden an die Ablaufsteuerung und Auswerteeinrichtung 9 zur weiteren Verarbeitung übergeben. Durch eine Messeinrichtung 10 wird zudem die an den Messelektroden 5 und 6 entstehende Spannung abgegriffen und ebenfalls an die Ablaufsteuerung und Auswerteeinrichtung 9 zur Messwertbestimmung weitergegeben, welche den Ablauf der Messvorgänge durch geeignete Steuerung der Ansteuereinrichtung 7 und geeignete Auswertung der von den Messeinrichtungen 8 und 10 bereitgestellten Messwerte steuert sowie aus den Spannungswerten einen Messwert für die Fließgeschwindigkeit berechnet, der an eine in der Zeichnung der Übersichtlichkeit wegen nicht dargestellte, übergeordnete Leitstation gemeinsam mit Zustandsmeldungen, insbesondere Fehlermeldungen, übergeben wird.

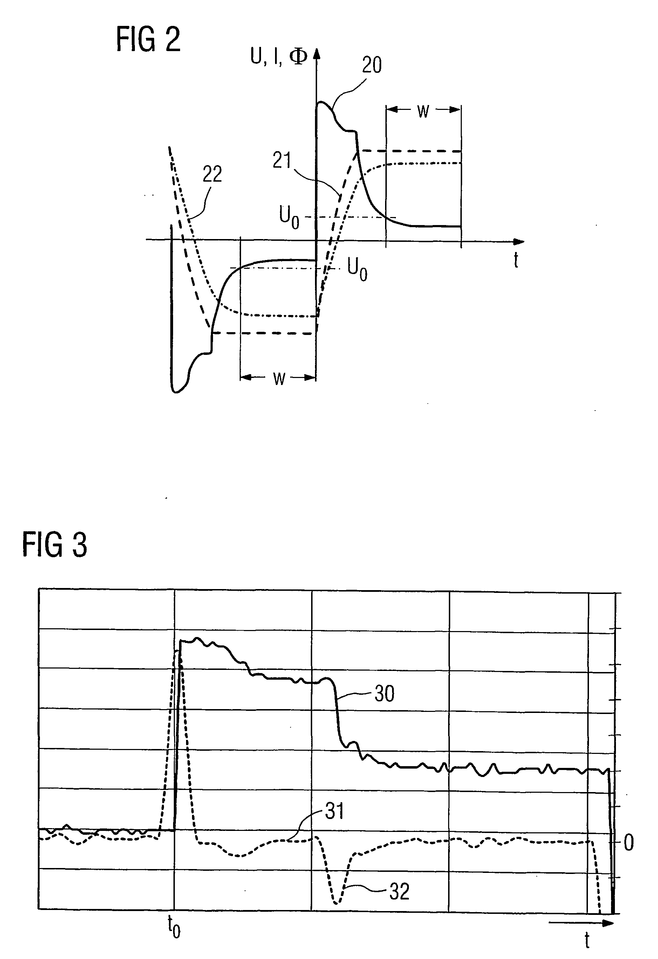

Figur 2 zeigt einen qualitativen Verlauf 20 der an der Spulenanordnung anliegenden Spannung U, einen Verlauf 21 des durch die Spulenanordnung fließenden Stromes I sowie einen Verlauf 22 des erzeugten magnetischen Flusses $\phi$. Auf der Abszisse ist die Zeit t, auf der Ordinate die Spannung U, der Strom I und der magnetische Fluss $\phi$ aufgetragen. In der Figur ist deutlich erkennbar, dass der Aufbau des Magnetfelds mit dem magnetischen Fluss entsprechend dem Verlauf 22 gegenüber dem durch die Spulenanordnung fließenden Strom I mit dem Verlauf 21 zeitlich verzögert ist. Die Stärke des magnetischen Flusses ändert sich noch, während der Spulenstrom bereits auf einen konstanten Wert geregelt wird. Bei veränderlichem magnetischen Fluss wird jedoch in den Messkreis, der durch die Elektroden 5 und 6 sowie die Zuleitungen zur Messeinrichtung 10 (Figur 1) gebildet wird, eine Spannung induziert, welche die an den Messelektroden abgegriffenen Werte, die im idealen Fall proportional zur Fließgeschwindigkeit sein sollten, verfälscht. Die Zusammenhänge zwischen der an der Spulenanordnung anliegenden Spannung $V_{coil}$, dem durch die Spulenanordnung fließenden Strom $I_{coil}$, dem elektrischen Widerstand der Spulenanordnung $R_{coil}$, dem in der Spulenanordnung herrschenden magnetischen Fluss $\phi_{coil}$, den in die elektrisch leitenden Teile des Durchflussmessers induzierten Wirbelströmen $I_{eddy}$, der dort herrschenden Spannung $V_{eddy}$, dem elektrischen Widerstand $R_{eddy}$, mit welchem diese konstruktiven, elektrisch leitenden Teile behaftet sind, dem in den Teilen herrschenden magnetischen Fluss $\phi_{eddy}$, der Eigeninduktivität $L_{eddy}$ der Teile, der Eigeninduktivität $L_{coil}$ der Spulenanordnung, der Gegeninduktivität M zwischen Spulenanordnung und konstruktiven Teilen sowie des Magnetfelds $\phi$ im Messrohr können mit den folgenden Formeln beschrieben werden:

$$V_{coil} - R_{coil} \cdot I_{coil} = \frac{\partial \phi_{coil}}{\partial t} \quad ; \quad \phi_{coil} = L_{coil} \cdot I_{coil} + M \cdot I_{eddy}$$

$$V_{eddy} - R_{eddy} \cdot I_{eddy} = \frac{\partial \phi_{eddy}}{\partial t} \quad ; \quad \phi_{eddy} = L_{eddy} \cdot I_{eddy} + M \cdot I_{coil}$$

$$V_{eddy} = 0$$

$$\phi = L_{coil} \cdot I_{coil} + L_{eddy} \cdot I_{eddy} .$$

Aus diesen Gleichungen kann eine Beziehung zwischen der in das Messsystem induzierten Spannung $U_{induced}$ und der am Spulensystem abgegriffenen Spannung abgeleitet werden:

$$U_{induced} \propto \frac{\partial \phi}{\partial t} = L_{coil} \cdot \frac{\partial I_{coil}}{\partial t} + L_{eddy} \cdot \frac{\partial I_{eddy}}{\partial t}$$

$$= \frac{\partial \phi_{coil}}{\partial t} - M \cdot \frac{\partial I_{eddy}}{\partial t} + \frac{\partial \phi_{eddy}}{\partial t} - M \cdot \frac{\partial I_{coil}}{\partial t}$$

$$= \left( V_{coil} - R_{coil} \cdot I_{coil} \right) - R_{eddy} \cdot I_{eddy} - M \cdot \left( \frac{\partial I_{eddy}}{\partial t} + \frac{\partial I_{coil}}{\partial t} \right).$$

Im letzten Ausdruck der obigen Gleichung ist aufgrund der Konstantstromregelung des Spulenstroms $\partial I_{coil}/\partial t$ = 0. Es ist somit aus der Gleichung ersichtlich, dass keine Spannung in den Messkreis induziert wird, wenn der Spulenstrom konstant ist und die Wirbelströme abgeklungen sind. In diesem Fall gilt $V_{coil} = R_{coil} \cdot I_{coil}$. Weiterhin ist die in den Messkreis induzierte Spannung nach dem Abklingen der Wirbelströme proportional zu dem Ausdruck ($V_{eoil}$ - $R_{coil}$ · $I_{coil}$). Ein Proportionalitätsfaktor, der erforderlich ist, um aus dieser Proportionalität eine Gleichung als funktionale Beziehung abzuleiten, wird durch exemplarspezifische Kalibrierung bei der erstmaligen Inbetriebnahme des Durchflussmessers ermittelt und zur späteren Kompensation eines Offsetfehlers abgespeichert. Damit der Messwert in einem geringeren Maße durch den Offsetfehler beeinflusst wird, werden lediglich Spannungswerte in seine Berechnung einbezogen, die innerhalb eines Messfensters W an den Messelektroden abgegriffen wurden. Das Messfenster W beginnt zu dem Zeitpunkt, zu welchem die an der Spulenanordnung abnehmbare Spannung U einen vorbestimmten Referenzwert $U_0$ unterschreitet. Entsprechend beginnt das Messfenster W bei umgekehrter Stromflussrichtung, wenn der Wert der Spannung U den Referenzwert -$U_0$ überschreitet. Dadurch ist eine Messung bei einem ausreichend stabilen Magnetfeld sichergestellt. Unterschreitet die Länge des Messfensters W einen vorgegebenen Mindestwert, so wird dies durch eine Zustandsmeldung angezeigt. In diesem Fall konnte das Magnetfeld innerhalb der Messperiode nicht ausreichend stabilisiert werden, was auf einen Fehler im Durchflussmesser hindeutet.

Figur 3 zeigt in einem Zeitdiagramm einen detaillierteren Verlauf 30 der an der Spulenanordnung abgenommenen Spannung und einen detaillierteren Verlauf 31 der Ableitung dieser Spannung. Die Breite des Impulses im Verlauf 31 der Ableitung beim Zeitpunkt $t_0$ der Stromrichtungsumkehr wird durch den verwendeten Algorithmus zur Berechnung der Ableitung verursacht. Wie bereits oben erwähnt, sollte die Spannung im Idealfall während des Messfensters konstant und ihre zeitliche Ableitung gleich Null sein, damit keine Spannung aufgrund von Veränderungen des Magnetfelds in den Messkreis induziert wird. Ein Impuls 32 im Verlauf 31 der Ableitung entsteht zum Zeitpunkt der Abschaltung der Boostspannung, zu welchem auf eine Konstantstromregelung des in die Spulenanordnung eingespeisten Stroms umgeschaltet wird. Zur Beurteilung der Stabilität des Magnetfeldes kann in einfacher Weise überwacht werden, wann der Verlauf 31 nach dem Impuls 32 erneut in ein den Wert Null einschließendes Toleranzband eintritt. Befindet sich zu diesem Zeitpunkt auch der Verlauf 30 innerhalb eines Toleranzbands um einen asymptotischen Endwert, welcher wie zuvor erläutert dem Produkt von Spulenwiderstand und Spulenstrom entspricht, können Messungen des Durchflusses mit ausreichender Zuverlässigkeit durchgeführt werden. Andererseits kann eine Fehlermeldung zur Anzeige einer Störung ausgegeben werden, wenn die Toleranzbänder nicht in einer geforderten Mindestzeit innerhalb einer Messperiode erreicht werden.

Die Ablaufsteuerung und Auswerteeinrichtung 9 gemäß Figur 1 ist mit einer Mikroprozessorsteuerung realisiert, wobei die dazu erforderliche Firmware in einem Speicher hinterlegt ist. Die zur Erfassung der an der Spulenanordnung anliegenden Spannung, zu ihrer Ableitung, zur Filterung zur Verminderung des Signalrauschens, zum Referenzwertvergleich und zur Messwertberechnung erforderlichen Funktionen können durch Erweiterungen der Firmware implementiert werden. Einmal erstellt wirkt sich die dazu benötigte Software bei einer größeren Stückzahl von Durchflussmessern kaum auf den Herstellungsaufwand der Durchflussmesser aus.

**Patentansprüche**

1.  Verfahren zum Betreiben eines elektromagnetischen Durchflussmessers mit einem Messrohr (2) und einer Spulenanordnung (3, 4) zur Erzeugung eines Magnetfelds senkrecht zur Durchflussrichtung durch das Messrohr (2), bei der periodisch die Stromrichtung geändert und der Strom in einer Messperiode nach einem Anstieg auf einen vorgegebenen Wert im Wesentlichen konstant gehalten wird, **dadurch gekennzeichnet, dass** bei konstant gehaltenem Spulenstrom die an der Spulenanordnung (3, 4) anliegende Spannung und/oder ihre Ableitung ermittelt und mit einem zugeordneten Referenzwert verglichen wird.

2.  Verfahren nach Anspruch 1, **dadurch gekennzeichnet, dass** die Auswertung einer an Messelektroden (5, 6) abgegriffenen Spannung zur Messwertermittlung beginnt, wenn die an der Spulenanordnung (3, 4) anliegende Spannung und/oder ihre Ableitung den jeweils zugeordneten Referenzwert bei konstant gehaltenem Spulenstrom unterschreitet.

3.  Verfahren nach Anspruch 1 oder 2, **dadurch gekennzeichnet, dass** der Zeitpunkt, wenn die Spannung und/oder ihre Ableitung den jeweils zugeordneten Referenzwert unterschreitet, mit einem weiteren Referenzwert verglichen wird, und dass eine Fehlermeldung ausgegeben wird, wenn dieser Zeitpunkt den weiteren Referenzwert überschreitet.

4.  Verfahren nach einem der vorhergehenden Ansprüche, **dadurch gekennzeichnet, dass** die Auswertung der an den Messelektroden (5, 6) abgegriffenen Spannung unterbrochen wird, wenn die an der Spulenanordnung (3, 4) anliegende Spannung und/oder ihre Ableitung den jeweils zugeordneten Referenzwert überschreitet.

5.  Verfahren nach einem der vorhergehenden Ansprüche, **dadurch gekennzeichnet, dass** der Referenzwert der an der Spulenanordnung (3, 4) anliegenden Spannung um 5% über dem Produkt aus dem elektrischen Widerstand der Spulenanordnung (3, 4) und dem konstant gehaltenem Spulenstrom liegt.

6.  Verfahren nach einem der vorhergehenden Ansprüche, **dadurch gekennzeichnet, dass** anhand der ermittelten, an der Spulenanordnung (3, 4) anliegenden Spannung gemäß einer vorbestimmten funktionalen Beziehung ein Korrekturwert berechnet wird, um welchen die an den Messelektroden (5, 6) abgegriffene Spannung zur Messwertermittlung korrigiert wird.

7.  Verfahren nach einem der vorhergehenden Ansprüche, **dadurch gekennzeichnet, dass** die ermittelte Spannung und/oder ihre Ableitung zunächst mit einem Tiefpass gefiltert wird.

8.  Elektromagnetischer Durchflussmesser zur Durchführung des Verfahrens nach einem der vorhergehenden Ansprüche mit einem Messrohr (2) und einer Spulenanordnung (3, 4) zur Erzeugung eines Magnetfelds senkrecht zur Durchflussrichtung durch das Messrohr (2), bei der periodisch die Stromrichtung geändert und der Strom in einer Periode nach einem Anstieg auf einen vorgegebenen Wert im Wesentlichen konstant gehalten wird, **dadurch gekennzeichnet, dass** eine Messeinrichtung (8) vorhanden ist, mit welcher bei konstant gehaltenem Spulenstrom die an der Spulenanordnung anliegende Spannung und/oder ihre Ableitung ermittelbar ist, und dass eine Auswerteeinrichtung (9) derart ausgebildet ist, dass die an der Spulenanordnung anliegende Spannung und/oder ihre Ableitung mit einem zugeordneten Referenzwert verglichen wird.

**Claims**

1. Method for operating an electromagnetic flowmeter having a measuring tube (2) and a coil arrangement (3, 4) for generating a magnetic field at right angles to the direction of flow through the measuring tube (2), wherein the direction of the current flow is periodically varied and, within a measuring period, following a rise to a predetermined value, the current is kept substantially constant, **characterised in that** with a coil current which is kept constant, the voltage applied to the coil arrangement (3, 4) and/or its derivative is determined and compared with an allocated reference value.

2. Method according to claim 1, **characterised in that** the evaluation of a voltage detected at the measuring electrodes (5, 6) for measurement value determination begins when the voltage applied to the coil arrangement (3, 4) and/or its derivative falls below the respective allocated reference value when the coil current is maintained constant.

3. Method according to claim 1 or 2, **characterized in that** the time point at which the voltage and/or its derivative falls below the respective allocated reference value is compared with a further reference value and that an error message is output if this time point falls below the further reference value.

4. Method according to one of the preceding claims, **characterized in that** the evaluation of the voltage detected at the measuring electrodes (5, 6) is interrupted if the voltage applied to the coil arrangement (3, 4) and/or its derivative exceeds the relevant allocated reference value.

5. Method according to one of the preceding claims, **characterized in that** the reference value for the voltage applied to the coil arrangement (3, 4) is 5% higher than a product of the electrical resistance of the coil arrangement (3, 4) and the coil current which is maintained constant.

6. Method according to one of the preceding claims, **characterized in that,** on the basis of the determined voltage applied to the coil arrangement (3, 4), according to a predetermined functional relation, a correction value is calculated, by which the voltage detected at the measuring electrodes (5, 6) is corrected for measurement value determination.

7. Method according to one of the preceding claims, **characterized in that** the voltage determined and/or its derivative is first filtered with a low pass filter.

8. Electromagnetic flowmeter for implementing the method according to one of the preceding claims comprising a measurement tube (2) and a coil arrangement (3, 4) for generating a magnetic field at right angles to the direction of flow through the measuring tube (2), wherein the direction of the current flow is periodically varied and, within a period, following a rise to a predetermined value, the current is kept substantially constant, **characterized in that** a measuring device (8) is present, with which, with the coil current kept constant, the voltage applied to the coil arrangement and/or its derivative can be determined and that an evaluating device (9) is configured such that the voltage applied to the coil arrangement and/or its derivative is compared with an allocated reference value.

**Revendications**

1. Procédé pour faire fonctionner un débitmètre électromagnétique comprenant un tube ( 2 ) de mesure et un dispositif ( 3, 4 ) de bobine pour la production d'un champ magnétique perpendiculairement à la direction de passage dans le tube ( 2 ) de mesure, dans lequel on modifie périodiquement le sens du courant électrique et on maintient sensiblement constant le courant électrique dans une période de mesure après qu'il s'est élevé jusqu'à une valeur prescrite, **caractérisé en ce que,** pour un courant de bobine maintenu constant, on détermine la tension s'appliquant au dispositif ( 3, 4 ) de bobine et/ou sa dérivée et on la compare à une valeur de référence associée.

2. Procédé suivant la revendication 1, **caractérisé en ce que** l'on commence l'exploitation d'une tension prélevée sur des électrodes ( 5, 6 ) de mesure pour la détermination de la valeur de mesure, lorsque la tension s'appliquant au dispositif ( 3, 4 ) de bobine et/ou sa dérivée devient, pour un courant de bobine maintenu constant, inférieure à la valeur de référence associée respective.

**3.** Procédé suivant la revendication 1 ou 2, **caractérisé en ce que** l'on compare à une autre valeur de référence l'instant où la tension et/ou sa dérivée devient inférieure à la valeur de référence respective associée et on émet une indication d'erreur lorsque cet instant dépasse l'autre valeur de référence.

**4.** Procédé suivant l'une des revendications précédentes, **caractérisé en ce que** l'on interrompt l'exploitation de la tension prélevée sur les électrodes ( 5, 6 ) de mesure, lorsque la tension s'appliquant au dispositif ( 3, 4 ) de bobine et/ou sa dérivée dépasse la valeur de référence associée respective.

**5.** Procédé suivant l'une des revendications précédentes, **caractérisé en ce que** la valeur de référence de la tension s'appliquant au dispositif ( 3, 4 ) de bobine est supérieure de 5% au produit de la résistance électrique du dispositif ( 3, 4 ) de bobine par le courant de bobine maintenu constant.

**6.** Procédé suivant l'une des revendications précédentes, **caractérisé en ce qu'**au moyen de la tension déterminée et s'appliquant au dispositif ( 3, 4 ) de bobine, on calcule, suivant une relation fonctionnelle déterminée à l'avance, une valeur de correction, par laquelle la tension prélevée aux électrodes ( 5, 6 ) de mesure est corrigée pour la détermination de la valeur de mesure.

**7.** Procédé suivant l'une des revendications précédentes, **caractérisé en ce qu'**on filtre d'abord la tension déterminée et/ou sa dérivée par un passe bas.

**8.** Débitmètre électromagnétique pour effectuer le procédé suivant l'une des revendications précédentes, comprenant un tube ( 2 ) de mesure et un dispositif ( 3, 4 ) de bobine pour la production d'un champ magnétique perpendiculairement à la direction de passage dans le tube ( 2 ) de mesure, dans lequel périodiquement la direction du courant électrique est modifiée et le courant électrique est maintenu sensiblement constant dans une période après une élévation jusqu'à une valeur prescrite, **caractérisé en ce qu'**il y a un dispositif ( 8 ) de mesure, par lequel on peut déterminer, pour un courant de bobine maintenu constant, la tension s'appliquant au dispositif de bobine et/ou sa dérivée et **en ce qu'**un dispositif ( 9 ) d'exploitation est tel que la tension s'appliquant au dispositif de bobine et/ou sa dérivée est comparée à une valeur de référence associée.

FIG 1

FIG 2

U, I, Φ

20

W

21

22

U₀

U₀

t

W

FIG 3

30

31

0

32

t₀

t

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19917268 A1
- EP 0969268 A1
- EP 1460394 A2
- DE 102004046238 A1